(19) Europäisches Patentamt / European Patent Office / Office européen des brevets

(11) **EP 2 948 666 B1**

(12) **EUROPEAN PATENT SPECIFICATION**

(45) Date of publication and mention
of the grant of the patent:
**05.04.2017 Bulletin 2017/14**

(21) Application number: **13821424.2**

(22) Date of filing: **31.12.2013**

(51) Int Cl.:
*F02M 21/06* (2006.01)     *F28D 7/00* (2006.01)
*F28F 1/40* (2006.01)     *F28F 7/02* (2006.01)

(86) International application number:
**PCT/US2013/078519**

(87) International publication number:
**WO 2014/116397 (31.07.2014 Gazette 2014/31)**

(54) **HEAT EXCHANGER IN A VEHICLE ENGINE SYSTEM**

WÄRMETAUSCHER IN EINEM FAHRZEUGMOTOR

ÉCHANGEUR DE CHALEUR DANS UN MOTEUR DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2013 US 201313749812**

(43) Date of publication of application:
**02.12.2015 Bulletin 2015/49**

(73) Proprietor: **Woodward, Inc.
Fort Collins, CO 80525 (US)**

(72) Inventors:
• **GLEESON, Brandon L.
Fort Collins, Colorado 80526 (US)**
• **BLOEMEN, Mike
Fort Collins, Colorado 80524 (US)**
• **BLOEMEN, James A.
Erie, Colorado 80516 (US)**

(74) Representative: **Conroy, John
Fish & Richardson P.C.
Highlight Business Towers
Mies-van-der-Rohe-Straße 8
80807 München (DE)**

(56) References cited:
**EP-A1- 2 487 431     EP-A2- 1 154 146
US-A1- 2010 018 672**

**Description**

CROSS-REFERENCE TO RELATED APPLICATIONS

This application claims priority to U.S. Application Serial No. 13/749,812, filed on January 25, 2013, entitled "Heat Exchange in a Vehicle Engine System."

BACKGROUND

This specification relates to heat exchange in a vehicle engine system.

In some vehicles, fuel gas is stored at high pressures, and the fuel gas pressure is regulated between the fuel tank and a fuel metering system at the engine. For example, in some conventional compressed natural gas (CNG) vehicles, fuel is regulated from pressures on the order of 248 bar down to pressures on the order of 8 bar. Regulating the fuel gas pressure may cool the fuel gas.

In some conventional systems, the fuel gas is heated by a heat exchanger between the pressure regulator and the fuel metering valve of the engine. For example, a brazed corrugated-plate heat exchanger can be used in a CNG vehicle to transfer heat from liquid engine coolant fluid to the fuel gas.

SUMMARY

In one general aspect, a heat exchanger includes offset flow paths.

In some aspects, a vehicle fluid heat exchanger system includes an elongate heat exchanger body. The heat exchanger body includes a first fuel port at a first end of the elongate heat exchanger body. The heat exchanger body includes a first heat transfer fluid port at the first end of the elongate heat exchanger body. The heat exchanger body includes a second fuel port at a second, opposite end of the elongate heat exchanger body. The heat exchanger body includes a second heat transfer fluid port at the second end of the elongate heat exchanger body. The heat exchanger body includes a fuel flow path that may be straight between the first and second fuel ports. The heat exchanger body includes a heat transfer fluid flow path that may be straight between the first and second heat transfer fluid ports. The heat transfer fluid flow path is parallel to, and beside, the fuel flow path. The heat exchanger body includes a heat transfer wall between the fuel flow path and the heat transfer fluid flow path. The heat exchanger body includes a first set of fins extending from the heat transfer wall into the fuel flow path. The heat exchanger body includes a second set of fins extending from the heat transfer wall into the heat transfer fluid flow path.

Implementations may include one or more of the following features. The heat exchanger body includes a first protrusion extending into the fuel flow path opposite the first set of fins. The heat exchanger body includes a second protrusion extending into the heat transfer fluid flow path opposite the second set of fins. The heat exchanger body includes one or more arcuate inner surfaces that define at least a portion of the fuel flow path, and the first protrusion is a convex arcuate protrusion. The heat exchanger body includes one or more other arcuate inner surfaces that define at least a portion of the heat transfer fluid flow path, and the second protrusion is a convex arcuate protrusion.

Additionally or alternatively, these and other implementations may include one or more of the following features. The heat exchanger body has an extruded shape. The fuel flow path has a cross section that is uniform between the first and second fuel ports, and the heat transfer fluid flow path has a cross section that is uniform between the first and second heat transfer fluid ports. The heat exchanger body is a unitary structure.

Additionally or alternatively, these and other implementations may include one or more of the following features. The first fuel port is a fuel inlet; the second fuel port is a fuel outlet; the first heat transfer fluid port is a heat transfer fluid outlet; and the second heat transfer fluid port is a heat transfer fluid inlet. The first fuel port is a fuel inlet; the second fuel port is a fuel outlet; the first heat transfer fluid port is a heat transfer fluid inlet; and the second heat transfer fluid port is a heat transfer fluid outlet. The heat transfer fluid flow path is a liquid engine coolant fluid flow path.

Additionally or alternatively, these and other implementations may include one or more of the following features. A compressed natural gas (CNG) engine includes a heat exchanger system. The compressed natural gas engine system includes a compressed natural gas storage tank. The compressed natural gas engine system includes a pressure regulator operable to receive compressed natural gas from the storage tank, expand the compressed natural gas, and communicate the expanded natural gas to an inlet of the heat exchanger. The compressed natural gas engine system includes an engine body configured to combust natural gas received from the heat exchanger. The compressed natural gas engine system includes a coolant pump operable to communicate engine coolant fluid from an engine body to an inlet of the heat exchanger.

Additionally or alternatively, these and other implementations may include one or more of the following features. Natural gas fuel is communicated through a fuel flow path in an elongate heat exchanger body. The fuel flow path may be straight between a first fuel port at a first end of the elongate heat exchanger body and a second fuel port at a second, opposite end of the elongate heat exchanger body. Liquid heat transfer fluid is communicated through a heat transfer fluid flow path in the elongate heat exchanger body. The heat transfer fluid flow path may be straight between a first heat transfer fluid port at the first end of the elongate heat exchanger body and a second heat transfer fluid port at the second end of the elongate heat exchanger body. The heat transfer fluid flow path is parallel to, and beside, the fuel flow path. Heat is transferred between the liquid heat transfer fluid in the heat transfer fluid flow path and the natural gas fuel in the fuel flow path by a heat transfer path between the heat transfer fluid flow path and the fuel flow path. The heat transfer path includes a heat transfer wall between the heat transfer fluid flow path and the fuel flow path; fins that extend into the heat transfer fluid flow path from the heat transfer wall; and fins that extend into the fuel flow path from the heat transfer wall.

Implementations may include one or more of the following features. Heat is transferred from the liquid heat transfer fluid to the natural gas fuel. The natural gas fuel is heated to a fuel intake temperature specified by a fuel metering system of a compressed natural gas engine system. The natural gas fuel is received from a fuel pressure regulator of a compressed natural gas engine system. The natural gas fuel is outputted to a fuel metering system of a compressed natural gas engine system. The heat transfer fluid is circulated through an engine coolant system of a compressed natural gas engine system.

In certain contexts, some aspects of what is described here may provide one or more advantages. A heat exchanger design may reduce the cost and complexity of manufacturing and assembling heat exchangers. In some cases, the heat exchanger architecture allows heat exchangers to be manufactured by a simpler, less expensive manufacturing process. A heat exchanger may be more efficient and robust to withstand certain types of severe operating environments (*e.g.*, on-engine mounted installations, severe vibration environments, or other types of environments). In some instances, a heat exchanger body can be formed from a single contiguous piece of material, without gaskets, without joints (*e.g.*, junctions that are bolted, welded, brazed, soldered, glued, etc.), and without end caps. A heat exchanger design can reduce the cost and complexity of installing heat exchangers. In some instances, a heat exchanger has two offset flow channels through a single piece of thermally conductive material, and the material is machined to directly accept an engine system's existing fuel and coolant fittings. In some instances, a heat exchanger design allows for an intelligent balance of increased heat transfer performance characteristics and manufacturing considerations. For example, a design-for-manufacture approach may facilitate components manufactured from a single entity of material.

The details of one or more implementations are set forth in the accompanying drawings and the description below. Other features, objects, and advantages will be apparent from the description and drawings, and from the claims.

DESCRIPTION OF DRAWINGS

FIG. 1 is a schematic diagram of an example engine system.

FIG. 2A is a perspective of an example heat exchanger.

FIG. 2B is a side view of the example heat exchanger 200 of FIG. 2A.

FIG. 2C is an end view of the example heat exchanger 200 of FIG. 2A.

Like reference symbols in the various drawings indicate like elements.

DETAILED DESCRIPTION

A heat exchanger for an engine system can be configured to heat engine fuel, for example, before the engine fuel is provided to the fuel metering valve at the main engine body. The heat exchanger can use an offset tube design that allows engine system fittings to be installed directly on the end of each flow path. As such, the heat exchanger system can be installed in an engine system, in some cases, without end caps on the flow paths. In some implementations, the heat exchanger body is a single unitary structure, made from a single entity of material. In some examples, the heat exchanger body can be manufactured without brazing, welding, soldering, bolting, or gluing of joints.

In some implementations, internal fins in the flow paths of the heat exchanger promote heat conduction between the flow paths. In some implementations, internal flow indentations in the flow paths promote flow of fluid toward the fins to increase heat transfer efficiency, for example, while meeting production and architecture constraints. The heat exchanger design may be amenable to manufacture by extrusion, die-casting, or other types of manufacturing processes. A heat exchanger can have an efficiency that is scalable with the length of the heat exchanger. For example, an extrusion can be cut to desired length, and different lengths can be achieved from the same tooling for different applications.

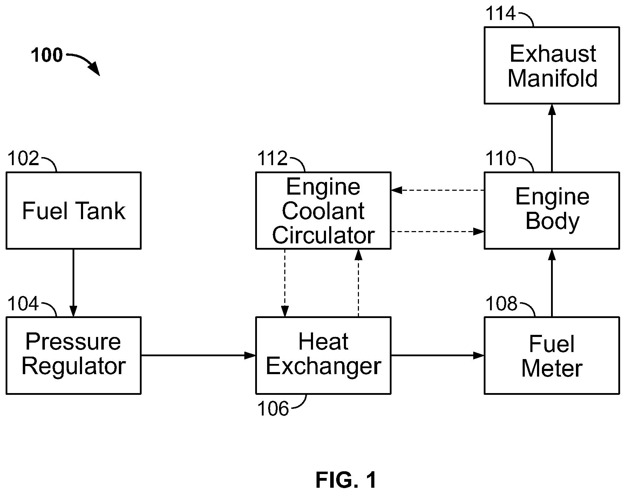

FIG. 1 is a schematic diagram of an example engine system 100, which includes a heat exchanger. The example engine system 100 can be the engine system of a compressed natural gas (CNG) vehicle. Or the example engine system 100 can be used in other applications, which may include other types of vehicles, or systems not including vehicles, etc.

The example engine system 100 includes a pressure regulator 104, a heat exchanger 106, a fuel metering system 108, an engine body 110, an engine coolant circulator system 112, and an exhaust manifold 114. The example engine system 100 receives fuel from a fuel tank 102. An engine system can include additional or different components and features. Arrows in FIG. 1 illustrate fluid flow between components in some example aspects of operation. The illustrated fluid flows can include additional or different engine components or alternative flow configurations.

The components of an engine system can be arranged as represented in FIG. 1, or the components can be arranged in a different manner. In some cases, components of the engine system 100 are combined or integrated with each other. In some cases, the components shown in FIG. 1 include subsystems or operate with auxiliary systems that are not specifically shown or described here.

The example fuel tank 102 shown in FIG. 1 can store fuel. The fuel can be stored at high pressure. In some examples, the fuel tank 102 can store compressed natural gas or another type of fuel at or above 248 bar. Other types of fuel may be used, and fuel may be stored at other pressures. The example fuel tank 102 is operable to communicate a high pressure fuel flow to the pressure regulator 104.

The pressure regulator 104 can regulate the pressure of fuel received from the fuel tank 102. For example, the pressure regulator 104 can receive fuel at a high pressure (*e.g.*, at or near the storage pressure of the fuel tank 102) and expand the fuel in an expansion chamber. The fuel can be expanded to a specified output pressure. For example, the fuel can be expanded to a pressure suitable for use with the heat exchanger 106, the fuel metering system 108, the engine body 110, or another component or subsystem. In some example applications, the fuel is expanded from an initial pressure of approximately 3600 psi at the inlet of the pressure regulator 104 to an output pressure of approximately 115 psi at the outlet of the pressure regulator 104. The pressure regulator 104 may operate in other pressure ranges. In some instances, expanding the fuel in the pressure regulator 104 reduces the fuel temperature. As such, the pressure regulator 104 can produce an output fuel flow that is cooler and has a lower pressure than the fuel flow produced by the fuel tank 102. The pressure regulator 104 is operable to communicate the pressure-regulated fuel flow to the heat exchanger 106.

In some implementations, the fuel from the pressure regulator 104 is heated before the fuel is communicated to the fuel metering system 108. For example, the pressure regulator 104 may output fuel at a temperature ranging from -70 °C to -60 °C, which may be too cold for certain engine components, in some instances. In some cases, the fuel from the pressure regulator 104 is heated to at least -40 °C before it is communicated to the fuel metering system 108. In some cases, the fuel may contain water or other fluids, and the fuel can be heated to at least 10 °C or 20 °C before it is communicated to the fuel metering system 108.

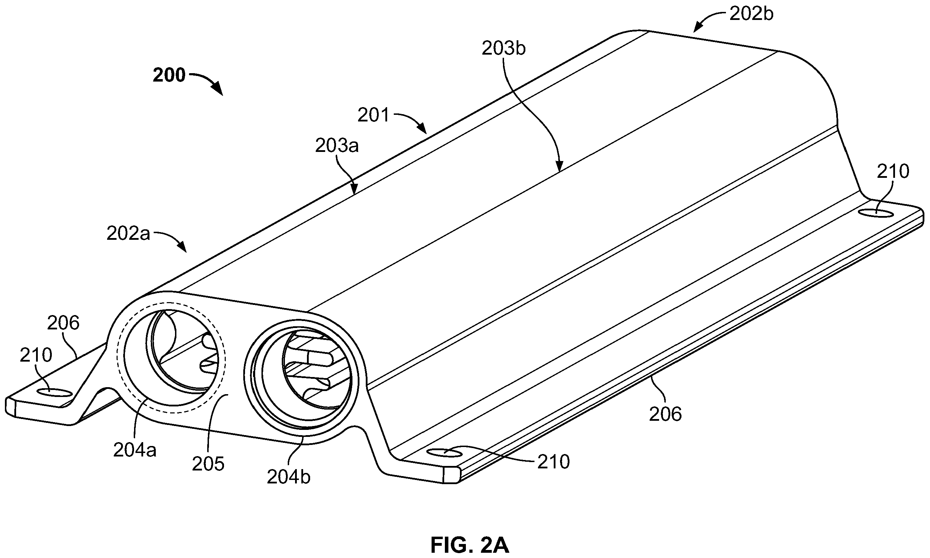

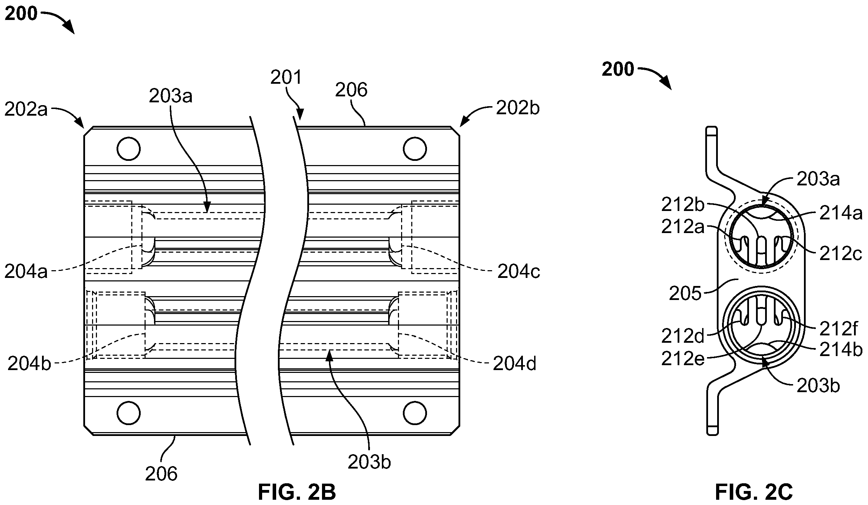

The example heat exchanger 106 can heat the pressure-regulated fuel received from the pressure regulator 104. The example heat exchanger 106 can heat the fuel using the heated engine coolant fluid from the engine coolant circulator system 112. For example, the heat exchanger 106 can receive engine coolant fluid from the engine coolant circulator system 112 and fuel from the pressure regulator 104. In some example implementations, the heat exchanger 106 receives engine coolant fluid at temperatures in the range of 70 °C to 85 °C, and the heat exchanger 106 receives fuel having temperatures in the range of -70 °C to -60 °C. The heat exchanger 106 can transfer heat from the engine coolant fluid to the fuel, thus heating the fuel and cooling the engine coolant fluid. The heat exchanger 106 can output the heated fuel to the fuel metering system 108, and the heat exchanger 106 can output the cooled engine coolant fluid to the engine coolant circulator system 112. The heat exchanger 106 can heat the fuel to a specified temperature. For example, the fuel can be heated to a temperature suitable for use with the fuel metering system 108, the engine body 110, or another component of the engine system 100. An example heat exchanger 200 is shown in FIGS. 2A, 2B, and 2C. Other types of heat exchangers can be used in the engine system 100.

In some implementations, the heat exchanger 106 includes two flow paths: a fuel flow path and an engine coolant fluid flow path. The fuel flow path can be straight and have a uniform cross section between a fuel inlet and a fuel outlet at opposing ends of the heat exchanger body. The engine coolant fluid flow path can be straight and have a uniform cross section between an engine coolant fluid inlet and an engine coolant fluid outlet at opposing ends of the heat exchanger body. A heat transfer wall between the fuel flow path and the engine coolant fluid flow path can provide for heat transfer from the engine coolant fluid to the fuel. In some cases, the flow paths include fins that extend from the heat transfer wall into the flow paths. Such fins may, in some instances, increase the surface area of the flow paths and promote heat transfer between the flow paths. In some cases, the flow paths include protrusions opposite the fins. Such protrusions may, in some instances, promote flow toward the heat transfer wall and thereby promote heat transfer between the flow paths.

The heat exchanger 106 can include flow paths that are parallel. For example, the fuel flow path and the engine coolant fluid flow path can be parallel to each other. Here, the term "parallel" is used broadly. Generally, two flow paths can be considered parallel if they do not converge and have a uniform separation distance over their respective lengths. But two flow paths can be considered parallel in other instances as well. In some cases, two non-converging flow paths can be considered "parallel" even though the flow paths do not have a uniform separation distance over their respective lengths. For example, small variations in separation distance may be introduced based on manufacturing or design considerations. Two non-converging flow paths may be considered parallel, for example, if their relative orientations define a small angle (e.g., less than approximately 15 degrees).

The heat exchanger 106 can include flow paths that are straight between the respective flow path inlets and outlets. For example, the fuel flow path can be straight between the fuel inlet and the fuel outlet, and the engine coolant fluid flow path can be straight between the engine coolant fluid inlet and the engine coolant fluid outlet. Here, the term "straight" is used broadly. Generally, a flow path can be considered straight if it produces a bulk flow direction that does not curve, turn, or bend. But a flow path can be considered straight in other instances as well. In some cases, a flow path can be considered "straight" even though the flow path includes curves, turns, or bends or relatively small angles. For example, small curves, turns or bends may be introduced based on manufacturing or design considerations. In some instances, a flow path may be considered straight, for example, if it includes curves, bends or turns that are small (*e.g.*, less than approximately 15 degrees).

The heat exchanger 106 can include flow paths that have a uniform cross section between the respective flow path inlets and outlets. For example, the fuel flow path can have a uniform cross section from the fuel inlet to the fuel outlet, and the engine coolant fluid flow path can have a uniform cross section from the engine coolant fluid inlet to the engine coolant fluid outlet. Extruded components generally have a uniform cross section, which is defined by an extrusion die. Here, the term "uniform" is used broadly. Generally, a flow path's cross section can be considered uniform if the flow area geometry remains constant over the length of the flow path. But a flow path cross section can be considered uniform in other instances as well. In some cases, a flow path's cross section can be considered "uniform" even though the cross section includes small variations. For example, variations may be introduced based on manufacturing or design considerations. Moreover, a flow path's cross section can be considered uniform despite variations at the flow path's inlet and outlet, for example, to accommodate fittings or connectors.

The engine body 110 can include various features, components, and subsystems. For example, the engine body 110 can include a combustion chamber, a cylinder, a piston, an ignition system, a cooling system, a fuel injection system, and various other features. In some implementations, the engine body 110 can receive fuel from the fuel metering system 108 and air from an air intake manifold; and an ignition system can ignite an air-fuel mixture in the combustion chamber in the engine body 110, which moves the piston and produces the mechanical output of the engine body 110 (e.g., rotation of a crank shaft, etc.). The exhaust gas created by combustion in the engine body 110 can be directed (e.g., through an exhaust valve) to the exhaust manifold 114. The exhaust manifold 114 can receive the exhaust gas from the engine body 110. The exhaust manifold 114 can communicate the exhaust gas to an external environment, to another subsystem of the engine system 100, or elsewhere. The engine body 110 can discard excess heat energy by transferring the excess heat energy to engine coolant fluid provided by the engine coolant circulator system 112.

The engine coolant circulator system 112 can include pumps, reservoirs, valves, tubes, hoses, or other types of components. The example engine coolant circulator system 112 can circulate liquid engine coolant fluid in the engine body 110 to cool the engine body 110 during operation. The example engine coolant circulator system 112 can also circulate the engine coolant fluid in the heat exchanger 106 to heat the fuel in the heat exchanger 106. For example, the engine coolant circulator system 112 may receive heated engine coolant fluid from the engine body 110 and provide the heated engine coolant fluid to the heat exchanger 106. The heat exchanger 106 may, in some instances, cool the engine coolant fluid by transferring heat from the engine coolant fluid to the fuel in the heat exchanger 106. The engine system 100 may include additional components or subsystems to further cool the coolant fluid before the coolant fluid is recirculated in the engine body 110.

In one aspect of operation, the pressure regulator 104 receives high-pressure fuel gas from the fuel tank 102 and expands the fuel gas to a lower pressure. The heat exchanger 106 receives the fuel gas from the pressure regulator 104 and receives the engine coolant fluid from the engine coolant circulator system 112. The heat exchanger 106 heats the fuel gas by transferring thermal energy from the engine coolant fluid. For example, the fuel may be heated to a fuel intake temperature specified by the fuel metering system 108. The heated fuel gas is communicated from the heat exchanger 106 to the fuel metering system 108, and the engine coolant fluid is communicated from the heat exchanger 106 to the engine coolant circulator system 112. The engine body 110 combusts the fuel and communicates the exhaust to the exhaust manifold 114. The engine body 110 transfers heat energy to the liquid engine coolant fluid, which is then circulated back to the heat exchanger 106.

FIGS. 2A, 2B, and 2C show an example heat exchanger 200. FIG. 2A is a perspective view; FIG. 2B is a bottom side view; and FIG. 2C is an end view. The example heat exchanger 200 shown in FIGS. 2A, 2B, and 2C can be used in engine systems (including compressed natural gas engine systems and other types of engine systems) or in other types of operating environments. In some applications, the example heat exchanger 200 is used to heat fuel, such as, for example, natural gas fuel or another type of fuel. The example heat exchanger 200 can generally be used to heat or cool any fluid, including liquids or gases other than fuel. The example heat exchanger 200 can be modified for particular applications. In some instances, the example heat exchanger 200 can be used to transfer heat between two gaseous fluids (gas-to-gas heat exchange), between two liquids (liquid-to-liquid heat exchange), or between a gas and a liquid.

The example heat exchanger 200 includes an elongate heat exchanger body 201 having a first end 202a and a second end 202b opposite the first end 202a.

The heat exchanger body 201 includes a fuel port 204b and a heat transfer fluid port 204a at the first end 202a; and the heat exchanger body 201 includes another fuel port 204d and another heat transfer fluid port 204c at the second end 202b. A fuel flow path 203b extends through the heat exchanger body 201 between the fuel ports 204b, 204d; and heat transfer fluid flow path 203a extends through the heat exchanger body 201 between the heat transfer fluid ports 204a, 204c. In the example shown, mounting supports 206 extend from the sides of the heat exchanger body 201. The example mounting supports 206 include holes 210 to accept mounting hardware (e.g., bolts, etc.) for installation of the heat exchanger 200 in application.

The example heat exchanger 200 includes two side-by-side flow paths that are parallel to each other. As shown in the figures, the fuel flow path 203b is parallel to, and beside, the heat transfer fluid flow path 203 a. The example fuel flow path 203b is straight between the fuel ports 204b, 204d and it has a uniform cross section between the fuel ports 204b, 204d. The example heat transfer fluid flow path 203a is straight between the heat transfer fluid ports 204a, 204c and it has a uniform cross section between the heat transfer fluid ports 204a, 204c.

The example heat exchanger 200 includes a heat transfer wall 205 between the fuel flow path 203b and the heat transfer fluid flow path 203a. Fins extend into the flow paths from the heat transfer wall 205. As shown in FIG. 2C, three fins 212a, 212b, 212c extend into the fuel flow path 203b, and three fins 212d, 212e, 212f extend into the heat transfer fluid flow path 203 a. A heat exchanger can include a different number of fins (e.g., fewer than three fins, or more than three fins) in either or both of the flow paths.

In the example shown in FIGS. 2A, 2B, and 2C, the flow paths have a generally cylindrical geometry. For example, the ports and the arcuate inner surfaces of the heat exchanger body 201 define the generally cylindrical geometries. The heat transfer wall 205 follows the radial perimeters defined by the cylindrical geometry, and the fins extend from the heat transfer wall 205 toward a centerline defined by the radial geometry. As shown, each flow path includes fins of multiple lengths. The middle fins 212b, 212e are each longer than their respective, neighboring outer fins 212a, 212c, 212d, 212f. The example fins 212a, 212b, 212c, 212d, 212e, 212f are elongate structures that extend from the radial perimeter of the cylindrical geometry of each respective flow path. In the example heat exchanger 200, the fins terminate with a radiused tip near the flow path centerline. The fins may have another shape.

The heat transfer wall 205 and the fins of the example heat exchanger 200 promote heat transfer between the two flow paths. The thickness, size, and geometry of the heat transfer wall and the fins can be specified based on various considerations. For example, thinner fins may provide a larger cross section for fluid flow and less efficient heat transfer; a larger number of fins may provide more efficient heat transfer and less mechanical stability; a thicker heat transfer wall may accommodate easier installation and less efficient heat transfer. In some example implementations, the flow paths are placed as close together as possible while allowing installation of fuel and coolant fittings (e.g., with an open-ended hex wrench or other apparatus). Other factors may also be considered.

The example heat exchanger 200 includes protrusions extending into the flow paths. As shown in FIG. 2C, a protrusion 214a extends into the fuel flow path 203b opposite the fins 212a, 212b, 212c; and a protrusion 214b extends into the heat transfer fluid flow path 203a opposite the fins 212d, 212e, 212f. The example protrusions 214a, 214b protrude from the generally cylindrical geometry of the respective flow paths. As shown in FIG. 2C, the example protrusions 214a, 214b are convex arcuate structures that extend from the radial perimeter of the cylindrical geometry of each respective flow path. The protrusions may have another shape.

The protrusions 214a, 214b of the example heat exchanger 200 direct the flow of fluid within each flow path toward the fins. Because the fins provide heat transfer between the flow paths, the protrusions 214a, 214b can promote more efficient heat transfer in the example heat exchanger 200 by causing a greater proportion of fluid to contact the fins. For example, the protrusions 214a, 214b increase the proportion of the flow area that is directly between and about the fins.

The example heat exchanger body 201 is a unitary structure that can be formed by extrusion or another manufacturing process. The heat exchanger body 201 can be made from a thermally conductive material, such as, for example, aluminum. In some implementations, the heat exchanger body 201 can be formed by extruding aluminum through an extrusion die and cutting the extruded shape to the appropriate length. The ports 204b, 204a, 204d, 204c can be machined to accommodate fittings, seals, or other hardware. In some implementations, the fuel fittings are SAE-8 O-ring straight thread and the fuel ports of the heat exchanger include an O-ring gland, and the coolant fittings are ½" NPT fittings and the coolant ports do not include an O-ring gland.

The example heat exchanger body 201 can be adapted for various configurations. In some cases, both ports 204b, 204a at one end 202a are inlets, and both ports 204d, 204c at the opposite end 202b are outlets. In such cases, the flow paths 203b, 203a are configured to communicate flow in the same direction: from the inlets at one end 202a to outlets at the opposite end 202b. In some cases, the flow paths 203b, 203a are configured to communicate flow in opposite directions. As an example, in some implementations, the fuel port 204b is a fuel inlet; the fuel port 204d is a fuel outlet; the heat transfer fluid port 204a is a heat transfer fluid outlet; and the heat transfer fluid port 204c is a heat transfer fluid inlet.

In some aspects of operation, fuel gas is communicated through the fuel flow path 203b, and engine coolant fluid is communicated through the heat transfer fluid flow path 203 a. Heat is transferred from the engine coolant fluid in the heat transfer fluid flow path 203a to the fuel gas in the fuel flow path 203b. The thermally conductive material of the heat exchanger body 201 provides a heat transfer path between the fluid flow paths. The heat transfer path includes the heat transfer wall 205 and the fins 212a, 212b, 212c, 212d, 212e, 212f. The fuel gas is heated by heat energy from the engine coolant fluid. Other types of fluids can be heated in the example heat exchanger 200; and the example heat exchanger 200 can extract heat energy from other types of heat transfer fluids.

In some instances, the design of the example heat exchanger 200 can provide one or more advantages. For example, the example heat exchanger 200 may be capable of surviving in harsh environments and when it is subjected to extreme operating conditions. In some instances, the example heat exchanger 200 can serve as a load-bearing member in a mechanical structure, which can result in fewer structural components and lighter assemblies. The example heat exchanger 200 can, in some implementations, be cut to a specified length to facilitate total heat transfer requirements and spatial constraints. In some examples, the example heat exchanger 200 can be adapted for use in diesel fuel cooler or heater systems, engine oil cooler systems, transmission oil cooler systems, hydraulic fluid cooler systems, liquefied natural gas (LNG) vaporizer systems, and other types of systems. In some environments, multiple heat exchangers can be used in a multi-pass configuration to increase heat transfer. In some cases, a heat exchanger configuration can be mounted vertically and used as a vaporizer and liquid-trap (*e.g.*, as in liquefied petroleum gas (LPG) conditioning systems, etc.).

In some instances, the fuel and heat transfer fluid ports of the example heat exchanger 200 can be configured for specified operating environments. For example, the ports can be threaded for fluid fittings, machined for O-ring sealed end caps that could be used to couple multiple extrusions together. In some implementations, the example heat exchanger 200 can be machined to accommodate sensor ports. For example, the example heat exchanger 200 can include ports for measuring fluid temperature, pressure, mass flow, or other fluid parameters.

The parameters and features of the example heat exchanger 200 can be adapted for particular design goals. For example, the size and geometry of flow paths, inlets, fins, and protrusions can be specified based on heat transfer principles. Various thermodynamic principles can be used to analyze heat exchanger designs. For example, heat exchanger design analysis may account for Newton's Law of Cooling, the Reynolds number, the Nusselt number, the Prandtl number, the convection coefficient, heat transfer parameters, and other analytical tools. From Newton's Law of Cooling (convective heat transfer):

$$q = h * A(Ts - Tm),$$

where $q$ is heat transfer, $h$ is the convection coefficient, $A$ is heat transfer surface area, $Ts$ is surface temperature, and $Tm$ is fluid temperature. Some designs seek to increase or optimize the heat transfer quantity $q$. The heat transfer coefficient may be influenced by the thermal boundary layer in the fluid near the surface of a heat exchanger. The heat transfer coefficient at the boundary layer may follow the equation

$$h = \frac{-kf * \frac{\partial Tm}{\partial y}}{Ts - Tm},$$

where $kf$ is the thermal conductivity of the fluid and the derivative term is the temperature gradient at the surface.

The Nusselt number ($Nu$) can be derived from an effective diameter ($L$) of a flow path (related to the geometry), fluid thermal conductivity ($kf$), and a convection coefficient ($h$). The Nusselt number is a dimensionless quantity expressed:

$$Nu = \frac{h * L}{kf}.$$

The Nusselt number can be useful in heat exchanger analysis, for example, as it describes the dimensionless temperature gradient at the surface and can therefore provide a measure of the heat transfer to the fluid from the wetted surface of the heat exchanger. The Nusselt number can also be expressed by numerous empirical relationships that have been established for various heat exchanger geometries, such as the Dittus-Boelter equation for internal flow in a circular tube. The general form of such equations relates the Nusselt number to the Reynolds Number (Re) and Prandtl Number (Pr):

$$Nu = f(Re, Pr).$$

The Reynolds number describes the fluid properties in terms of the ratio of inertial and viscous forces:

$$Re = \frac{V * L}{\nu},$$

where V is the fluid velocity and $\nu$ is the fluid kinematic viscosity. The Prandtl number expresses the ratio of fluid momentum diffusivity and thermal diffusivity, and is essentially independent from the design:

$$Pr = \frac{cp*\mu}{kf},$$

where *cp* is the fluid heat capacity, $\mu$ is the viscosity.

Parameters that promote heat transfer can be targeted, for example, by analyzing heat exchanger efficiency. For example, considering the Reynolds number (Re), the heat exchanger flow path profile design directly affects the geometry (L) as well as the fluid velocity (V). In the example heat exchanger 200, the geometry (L) is determined by the fins and the flow indentations across from the fins. The flow indentations promote movement of the flow towards (which may include into) the fins and increase the mean velocity (V) through this region in the heat exchanger. Increasing the Reynolds number in this manner also increases the Nusselt number (Nu). Since the Nusselt number is increased by the profile design features, so then is the convection coefficient (h). The effects of geometry (L) are again applied in this relationship. The heat transfer parameter q may also be increased. For example, the fins in the flow paths can increase the heat transfer surface area (A). Since the convection coefficient (h) and the geometry (A) are shown to be products of the profile design features, Newton's Law of Cooling may provide that the heat transfer of the heat exchanger is increased by such profile designs.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented separately or in any suitable subcombination.

A number of examples have been shown and described. Nevertheless, it will be understood that various modifications can be made. Accordingly, other embodiments are within the scope of the claims.

Numbered clauses:

Clause 1: A vehicle fluid heat exchanger system comprising an elongate heat exchanger body that includes a first fuel port at a first end of the elongate heat exchanger body; a first heat transfer fluid port at the first end of the elongate heat exchanger body; a second fuel port at a second, opposite end of the elongate heat exchanger body; a second heat transfer fluid port at the second end of the elongate heat exchanger body; a fuel flow path between the first and second fuel ports; a heat transfer fluid flow path between the first and second heat transfer fluid ports, the heat transfer fluid flow path being parallel to, and beside, the fuel flow path; a heat transfer wall between the fuel flow path and the heat transfer fluid flow path; a first plurality of fins extending from the heat transfer wall into the fuel flow path; and a second plurality of fins extending from the heat transfer wall into the heat transfer fluid flow path.

Clause 2: The vehicle fluid heat exchanger system of clause 1, wherein the elongate heat exchanger body includes a first protrusion extending into the fuel flow path opposite the first plurality of fins; and a second protrusion extending into the heat transfer fluid flow path opposite the second plurality of fins.

Clause 3: The vehicle fluid heat exchanger system of clause 2, wherein the elongate heat exchanger body includes one or more arcuate inner surfaces that define at least a portion of the fuel flow path, and the first protrusion is a convex arcuate protrusion; and one or more other arcuate inner surfaces that define at least a portion of the heat transfer fluid flow path, and the second protrusion is a convex arcuate protrusion.

Clause 4: The vehicle fluid heat exchanger system of anyone of the preceding clauses, wherein the elongate heat exchanger body has an extruded shape.

Clause 5: The vehicle fluid heat exchanger system of anyone of the preceding clauses, wherein the fuel flow path has a cross section that is uniform between the first and second fuel ports, and the heat transfer fluid flow path has a cross section that is uniform between the first and second heat transfer fluid ports.

Clause 6: The vehicle fluid heat exchanger system of anyone of the preceding clauses, wherein the elongate heat exchanger body is a unitary structure.

Clause 7: The vehicle fluid heat exchanger system of anyone of the preceding clauses, wherein the first fuel port is a fuel inlet, the second fuel port is a fuel outlet, the first heat transfer fluid port is a heat transfer fluid outlet, and the second heat transfer fluid port is a heat transfer fluid inlet.

Clause 8: The vehicle fluid heat exchanger system of anyone of the preceding clauses, wherein the heat transfer fluid flow path is an engine coolant fluid flow path.

Clause 9: A compressed natural gas engine system comprising a heat exchanger, the heat exchanger comprising a first fuel port at a first end of an elongate heat exchanger body; a first heat transfer fluid port at the first end of the elongate heat exchanger body; a second fuel port at a second, opposite end of the elongate heat exchanger body; a second heat transfer fluid port at the second end of the elongate heat exchanger body; a fuel flow path between the first and second fuel ports; a heat transfer fluid flow path between the first and second heat transfer fluid ports, the heat transfer fluid flow path being parallel to, and beside, the fuel flow path; a heat transfer wall between the fuel flow path and the heat transfer fluid flow path; a first plurality of fins extending from the heat transfer wall into the fuel flow path; and a second plurality of fins extending from the heat transfer wall into the heat transfer fluid flow path.

Clause 10: The compressed natural gas engine system of clause 9, comprising a compressed natural gas storage tank; and a pressure regulator operable to receive compressed natural gas from the storage tank, expand the compressed natural gas, and communicate the expanded natural gas to an inlet of the heat exchanger.

Clause 11: The compressed natural gas engine system of clause 9 or clause 10, comprising an engine body configured to combust natural gas received from the heat exchanger.

Clause 12: The compressed natural gas engine system of anyone of clauses 9 to 11, comprising a coolant pump operable to communicate engine coolant fluid from an engine body to an inlet of the heat exchanger.

Clause 13: The compressed natural gas engine system of anyone of clauses 9 to 12, wherein the heat exchanger includes a first protrusion extending into the fuel flow path opposite the first plurality of fins; and a second protrusion extending into the heat transfer fluid flow path opposite the second plurality of fins.

Clause 14: The compressed natural gas engine system of anyone of clauses 9 to 13, wherein the fuel flow path has a cross section that is uniform between the first and second fuel ports, and the heat transfer fluid flow path has a cross section that is uniform between the first and second heat transfer fluid ports.

Clause 15: The compressed natural gas engine system of anyone of clauses 9 to 14, wherein the elongate heat exchanger body is a unitary structure.

Clause 16: A natural gas engine fuel heating method comprising communicating natural gas fuel through a fuel flow path in an elongate heat exchanger body, the fuel flow path between a first fuel port at a first end of the elongate heat exchanger body and a second fuel port at a second, opposite end of the elongate heat exchanger body; communicating liquid heat transfer fluid through a heat transfer fluid flow path in the elongate heat exchanger body, the heat transfer fluid flow path between a first heat transfer fluid port at the first end of the elongate heat exchanger body and a second heat transfer fluid port at the second end of the elongate heat exchanger body, the heat transfer fluid flow path being parallel to, and beside, the fuel flow path; and transferring heat between the liquid heat transfer fluid in the heat transfer fluid flow path and the natural gas fuel in the fuel flow path by a heat transfer path between the heat transfer fluid flow path and the fuel flow path, the heat transfer path including a heat transfer wall between the heat transfer fluid flow path and the fuel flow path, fins that extend into the heat transfer fluid flow path from the heat transfer wall, and fins that extend into the fuel flow path from the heat transfer wall.

Clause 17: The method of clause 16, wherein transferring heat comprises transferring heat from the liquid heat transfer fluid to the natural gas fuel.

Clause 18: The method of clause 16 or 17, wherein transferring heat comprises heating the natural gas fuel to a fuel intake temperature specified by a fuel metering system of a compressed natural gas engine system.

Clause 19: The method of anyone of clauses 16 to 18, comprising receiving the natural gas fuel from a fuel pressure regulator of a compressed natural gas engine system; and outputting the natural gas fuel to a fuel metering system of a compressed natural gas engine system.

Clause 20: The method of anyone of clauses 16 to 19, comprising circulating the heat transfer fluid through an engine coolant system of a compressed natural gas engine system.

Clause 21: A compressed natural gas engine system comprising a vehicle fluid heat exchanger system according to anyone of clauses 1 to 8.

Clause 22: The compressed natural gas engine system of clause 21, comprising a compressed natural gas storage tank; and a pressure regulator operable to receive compressed natural gas from the storage tank, expand the compressed natural gas, and communicate the expanded natural gas to an inlet of the heat exchanger.

Clause 23: The compressed natural gas engine system of clause 21 or clause 22, comprising an engine body configured to combust natural gas received from the heat exchanger.

Clause 24: The compressed natural gas engine system of anyone of clauses 21 to 23, comprising a coolant pump operable to communicate engine coolant fluid from an engine body to an inlet of the heat exchanger.

Clause 25: The system or method of any preceding clause, wherein the fuel flow path is straight between the first and second fuel ports, and the heat transfer fluid flow path is straight between the first and second heat transfer fluid ports.

**Claims**

1. A vehicle fluid heat exchanger system comprising:

    an elongate heat exchanger body (201) that includes:

        a first fuel port (204b) at a first end of the elongate heat exchanger body;
        a first heat transfer fluid port (204a) at the first end of the elongate heat exchanger body;
        a second fuel port (204d) at a second, opposite end of the elongate heat exchanger body;
        a second heat transfer fluid port (204c) at the second end of the elongate heat exchanger body;
        a fuel flow path between the first and second fuel ports;
        a heat transfer fluid flow path between the first and second heat transfer fluid ports, the heat transfer fluid flow path being parallel to, and beside, the fuel flow path;
        a heat transfer wall (205) between the fuel flow path and the heat transfer fluid flow path;
        a first plurality of fins (212a-c) extending from the heat transfer wall into the fuel flow path; and
        a second plurality of fins (212d-f) extending from the heat transfer wall into the heat transfer fluid flow path;
        a first protrusion (214a) extending into the fuel flow path opposite the first plurality of fins; and
        a second protrusion (214b) extending into the heat transfer fluid flow path opposite the second plurality of fins.

2. The vehicle fluid heat exchanger system of claim 1, wherein the elongate heat exchanger body includes:

    one or more arcuate inner surfaces that define at least a portion of the fuel flow path, and the first protrusion is a convex arcuate protrusion;

    and
    one or more other arcuate inner surfaces that define at least a portion of the heat transfer fluid flow path, and the second protrusion is a convex arcuate protrusion.

3. The vehicle fluid heat exchanger system of any one of the preceding claims, wherein the elongate heat exchanger body has an extruded shape.

4. The vehicle fluid heat exchanger system of any one of the preceding claims, wherein the fuel flow path has a cross section that is uniform between the first and second fuel ports, and the heat transfer fluid flow path has a cross section that is uniform between the first and second heat transfer fluid ports.

5. The vehicle fluid heat exchanger system of any one of the preceding claims, wherein the elongate heat exchanger body is a unitary structure.

6. The vehicle fluid heat exchanger system of any one of the preceding claims, wherein the first fuel port is a fuel inlet, the second fuel port is a fuel outlet, the first heat transfer fluid port is a heat transfer fluid outlet, and the second heat transfer fluid port is a heat transfer fluid inlet.

7. The vehicle fluid heat exchanger system of any one of the preceding claims, wherein the heat transfer fluid flow path is an engine coolant fluid flow path.

8. The system of claim 1, comprising:

    a compressed natural gas storage tank;
    a pressure regulator operable to receive compressed natural gas from the storage tank, expand the compressed natural gas, and communicate the expanded natural gas to an inlet of the heat exchanger.

9. The system of claim 1 or claim 8, comprising an engine body configured to combust natural gas received from the heat exchanger.

10. The system of any one of claims 8 or 9, comprising a coolant pump operable to communicate engine coolant fluid from an engine body to an inlet of the heat exchanger.

11. A natural gas engine fuel heating method comprising:

    communicating natural gas fuel through a fuel flow path in an elongate heat exchanger body, (201) the fuel flow path between a first fuel port (204b) at a first end of the elongate heat exchanger body and a second fuel port (204d) at a second, opposite end of the elongate heat exchanger body;

communicating liquid heat transfer fluid through a heat transfer fluid flow path in the elongate heat exchanger body, the heat transfer fluid flow path between a first heat transfer fluid port at the first end of the elongate heat exchanger body and a second heat transfer fluid port at the second end of the elongate heat exchanger body, the heat transfer fluid flow path being parallel to, and beside, the fuel flow path; and

transferring heat between the liquid heat transfer fluid in the heat transfer fluid flow path and the natural gas fuel in the fuel flow path by a heat transfer path between the heat transfer fluid flow path and the fuel flow path, the heat transfer path including a heat transfer wall (205) between the heat transfer fluid flow path and the fuel flow path, fins (212d-f) that extend into the heat transfer fluid flow path from the heat transfer wall, and fins (212a-c) that extend into the fuel flow path from the heat transfer wall, a first protrusion (214a) extending into the fuel flow path opposite the first plurality of fins; and a second protrusion (214b) extending into the heat transfer fluid flow path opposite the second plurality of fins and transferring heat from the liquid heat transfer fluid to the natural gas fuel.

12. The method of claim 11, wherein transferring heat comprises heating the natural gas fuel to a fuel intake temperature specified by a fuel metering system of a compressed natural gas engine system.

13. The method of claim 11 or 12 comprising:

receiving the natural gas fuel from a fuel pressure regulator of a compressed natural gas engine system; and

outputting the natural gas fuel to a fuel metering system of a compressed natural gas engine system.

14. The method of any one of claims 11 to 13, comprising circulating the heat transfer fluid through an engine coolant system of a compressed natural gas engine system.

15. A compressed natural gas engine system comprising a vehicle fluid heat exchanger system according to any one of claims 1 to 7.

16. The system of claim 15, further comprising:

a compressed natural gas storage tank;
a pressure regulator operable to receive compressed natural gas from the storage tank, expand the compressed natural gas, and communicate the expanded natural gas to an inlet of the heat exchanger.

**Patentansprüche**

1. Fluidwärmetauschersystem für ein Fahrzeug, umfassend:

einen langgestreckten Wärmetauscherkörper (201), welcher Folgendes aufweist:

eine erste Kraftstofföffnung (204b) an einem ersten Ende des langgestreckten Wärmetauscherkörpers;
eine erste Wärmeübertragungsfluid-Öffnung (204a) an dem ersten Ende des langgestreckten Wärmetauscherkörpers;
eine zweite Kraftstofföffnung (204d) an einem zweiten, gegenüberliegenden Ende des langgestreckten Wärmetauscherkörpers;
eine zweite Wärmeübertragungsfluid-Öffnung (204c) an dem zweiten Ende des langgestreckten Wärmetauscherkörpers;
einen Kraftstoffstrompfad zwischen der ersten und zweiten Kraftstofföffnung;
einen Wärmeübertragungsfluid-Strompfad zwischen der ersten und zweiten Wärmeübertragungsfluid-Öffnung, wobei der Wärmeübertragungsfluid-Strompfad parallel zu und neben dem Kraftstoffstrompfad verläuft;
eine Wärmeübertragungswand (205) zwischen dem Kraftstoffstrompfad und dem Wärmeübertragungsfluid-Strompfad;
eine erste Vielzahl von Rippen (212a-c), welche sich von der Wärmeübertragungswand in den Kraftstoffstrompfad hinein erstreckt; und
eine zweite Vielzahl von Rippen (212d-f), welche sich von der Wärmeübertragungswand in den Wärmeübertragungsfluid-Strompfad hinein erstreckt;
eine erste Ausstülpung (214a), welche sich gegenüber der ersten Vielzahl von Rippen in den Kraftstoffstrompfad hinein erstreckt; und
eine zweite Ausstülpung (214b), welche sich gegenüber der zweiten Vielzahl von Rippen in den Wärmeübertragungsfluid-Strompfad hinein erstreckt.

2. Fluidwärmetauschersystem für ein Fahrzeug nach Anspruch 1, wobei der langgestreckte Wärmetauscherkörper Folgendes aufweist:

eine oder mehrere bogenförmige, innere Flächen, welche zumindest einen Abschnitt des Kraftstoffstrompfads definieren, und die erste Ausstülpung eine konvexe, bogenförmige Ausstülpung ist; und

eine oder mehrere andere bogenförmige, innere Flächen, welche zumindest einen Abschnitt des Wärmeübertragungsfluid-Strompfads definieren, und die zweite Ausstülpung eine konvexe, bogenförmige Ausstülpung ist.

3.  Fluidwärmetauschersystem für ein Fahrzeug nach einem der vorhergehenden Ansprüche, wobei der langgestreckte Wärmetauscherkörper eine extrudierte Gestalt besitzt.

4.  Fluidwärmetauschersystem für ein Fahrzeug nach einem der vorhergehenden Ansprüche, wobei der Kraftstoffstrompfad einen Querschnitt besitzt, welcher zwischen der ersten und zweiten Kraftstofföffnung konstant ist, und der Wärmeübertragungsfluid-Strompfad einen Querschnitt besitzt, welcher zwischen der ersten und zweiten Wärmeübertragungsfluid-Öffnung konstant ist.

5.  Fluidwärmetauschersystem für ein Fahrzeug nach einem der vorhergehenden Ansprüche, wobei der langgestreckte Wärmetauscherkörper eine einheitliche Struktur ist.

6.  Fluidwärmetauschersystem für ein Fahrzeug nach einem der vorhergehenden Ansprüche, wobei die erste Kraftstofföffnung ein Kraftstoffeinlass ist, die zweite Kraftstofföffnung ein Kraftstoffauslass ist, die erste Wärmeübertragungsfluid-Öffnung ein Wärmeübertragungsfluid-Auslass ist und die zweite Wärmeübertragungsfluid-Öffnung ein Wärmeübertragungsfluid-Einlass ist.

7.  Fluidwärmetauschersystem für ein Fahrzeug nach einem der vorhergehenden Ansprüche, wobei der Wärmeübertragungsfluid-Strompfad ein Strompfad einer Motorkühlflüssigkeit ist.

8.  System nach Anspruch 1, umfassend:

    einen Speichertank für komprimiertes Erdgas; einen Druckregler, welcher betriebsfähig ist, um komprimiertes Erdgas vom Speichertank aufzunehmen, das komprimierte Erdgas zu expandieren und das expandierte Erdgas zu einem Einlass des Wärmetauschers zu übertragen.

9.  System nach Anspruch 1 oder 8, umfassend einen Motorkörper, welcher dafür ausgelegt ist, vom Wärmetauscher aufgenommenes Erdgas zu verbrennen.

10. System nach einem der Ansprüche 8 oder 9, umfassend eine Kühlmittelpumpe, welche betriebsfähig ist, um Motorkühlflüssigkeit von einem Motorkörper zu einem Einlass des Wärmetauschers zu übertragen.

11. Verfahren zum Erwärmen von Erdgas als Motorkraftstoff, umfassend:

    Übertragen von Erdgas-Kraftstoff über einen Kraftstoffstrompfad in einem langgestreckten Wärmetauscherkörper (201), der Kraftstoffstrompfad zwischen einer ersten Kraftstofföffnung (204b) an einem ersten Ende des langgestreckten Wärmetauscherkörpers und einer zweiten Kraftstofföffnung (204d) an einem zweiten, gegenüberliegenden Ende des langgestreckten Wärmetauscherkörpers;
    Übertragen von flüssigem Wärmeübertragungsfluid über einen Wärmeübertragungsfluid-Strompfad in dem langgestreckten Wärmetauscherkörper, der Wärmeübertragungsfluid-Strompfad zwischen einer ersten Wärmeübertragungsfluid-Öffnung an dem ersten Ende des langgestreckten Wärmetauscherkörpers und einer zweiten Wärmeübertragungsfluid-Öffnung an dem zweiten Ende des langgestreckten Wärmetauscherkörpers, wobei der Wärmeübertragungsfluid-Strompfad parallel zu und neben dem Kraftstoffstrompfad verläuft; und
    Übertragen von Wärme zwischen dem flüssigen Wärmeübertragungsfluid im Wärmeübertragungsfluid-Strompfad und dem Erdgas-Kraftstoff in dem Kraftstoffstrompfad durch einen Wärmeübertragungspfad zwischen dem Wärmeübertragungsfluid-Strompfad und dem Kraftstoffstrompfad, wobei der Wärmeübertragungspfad Folgendes aufweist:

        eine Wärmeübertragungswand (205) zwischen dem Wärmeübertragungsfluid-Strompfad und den Kraftstoffstrompfad, Rippen (212d-f), welche sich von der Wärmeübertragungswand in den Wärmeübertragungsfluid-Strompfad hinein erstrecken, und
        Rippen (212a-c), welche sich von der Wärmeübertragungswand in den Kraftstoffstrompfad hinein erstrecken, eine erste Ausstülpung (214a), welche sich gegenüber der ersten Vielzahl von Rippen in den Kraftstoffstrompfad hinein erstreckt; und
        eine zweite Ausstülpung (214b), welche sich gegenüber der zweiten Vielzahl von Rippen in den Wärmeübertragungsfluid-Strompfad hinein erstreckt und
        Übertragen von Wärme von dem flüssigen Wärmeübertragungsfluid auf den Erdgas-Kraftstoff.

12. Verfahren nach Anspruch 11, wobei Übertragen von Wärme Erwärmen des Erdgas-Kraftstoffs auf eine Kraftstoff-Einlasstemperatur umfasst, welche von einem Kraftstoffbemessungssystem eines Motorsystems mit komprimiertem Erdgas spezifiziert wird.

13. Verfahren nach Anspruch 11 oder 12, umfassend:

Aufnehmen des Erdgas-Kraftstoffs von einem Kraftstoff-Druckregler eines Motorsystems mit komprimiertem Erdgas; und
Ausgeben des Erdgas-Kraftstoffs an ein Kraftstoffbemessungssystem eines Motorsystems mit komprimiertem Erdgas.

14. Verfahren nach einem der Ansprüche 11 bis 13, umfassend Zirkulieren des Wärmeübertragungsfluids durch ein Motorkühlsystem eines Motorsystems mit komprimiertem Erdgas.

15. Motorsystem mit komprimiertem Erdgas, umfassend ein Fluidwärmetauschersystem für ein Fahrzeug nach einem der Ansprüche 1 bis 7.

16. System nach Anspruch 15, weiter umfassend:

einen Speichertank für komprimiertes Erdgas;
einen Druckregler, welcher betriebsfähig ist, um komprimiertes Erdgas vom Speichertank aufzunehmen, das komprimierte Erdgas zu expandieren und das expandierte Erdgas zu einem Einlass des Wärmetauschers zu übertragen.

**Revendications**

1. Système d'échangeur thermique pour fluide de véhicule comprenant :

un corps allongé (201) d'échangeur thermique qui comprend :

un premier orifice pour carburant (204b) à une première extrémité du corps allongé d'échangeur thermique ;
un premier orifice pour fluide caloporteur (204a) à la première extrémité du corps allongé d'échangeur thermique ;
un second orifice pour carburant (204d) à la seconde extrémité opposée du corps allongé d'échangeur thermique ;
un second orifice pour fluide caloporteur (204c) à la seconde extrémité du corps allongé d'échangeur thermique ;
une voie de passage de carburant entre les premier et second orifices pour carburant ;
une voie de passage de fluide caloporteur entre les premier et second orifices pour fluide caloporteur, la voie de passage de fluide caloporteur étant parallèle à la voie de passage de carburant et à côté de celle-ci ;
une paroi de transfert de chaleur (205) entre la voie de passage de carburant et la voie de passage de fluide caloporteur ;
une première pluralité d'ailettes (212a-c) s'étendant depuis la paroi de transfert de chaleur dans la voie de passage de carburant ; et
une seconde pluralité d'ailettes (212d-f) s'étendant depuis la paroi de transfert de chaleur dans la voie de passage de fluide caloporteur ;
une première protubérance (214a) s'étendant dans la voie de passage de carburant en face de la première pluralité d'ailettes ; et
une seconde protubérance (214b) s'étendant dans la voie de passage de fluide caloporteur en face de la seconde pluralité d'ailettes.

2. Système d'échangeur thermique pour fluide de véhicule selon la revendication 1, dans lequel le corps allongé d'échangeur thermique comprend :

une ou plusieurs surfaces intérieures arquées qui délimitent au moins une partie de la voie de passage de carburant, et la première protubérance est une protubérance arquée convexe ; et
une ou plusieurs autres surfaces intérieures arquées qui délimitent au moins une partie de la voie de passage de fluide caloporteur, et la seconde protubérance est une protubérance arquée convexe.

3. Système d'échangeur thermique pour fluide de véhicule selon l'une quelconque des revendications précédentes, dans lequel le corps allongé d'échangeur thermique a une forme extrudée.

4. Système d'échangeur thermique pour fluide de véhicule selon l'une quelconque des revendications précédentes, dans lequel la voie de passage de carburant a une section transversale qui est uniforme entre les premier et second orifices pour carburant, et la voie de passage de fluide caloporteur a une section transversale qui est uniforme entre les premier et second orifices pour fluide caloporteur.

5. Système d'échangeur thermique pour fluide de véhicule selon l'une quelconque des revendications précédentes, dans lequel le corps allongé d'échangeur thermique est une structure monolithique.

6. Système d'échangeur thermique pour fluide de véhicule selon l'une quelconque des revendications précédentes, dans lequel le premier orifice pour carburant est une arrivée de carburant, le second orifice pour carburant est une sortie de carburant, le premier orifice pour fluide caloporteur est une sortie de fluide caloporteur, et le second orifice pour fluide caloporteur est une arrivée de fluide caloporteur.

**7.** Système d'échangeur thermique pour fluide de véhicule selon l'une quelconque des revendications précédentes, dans lequel la voie de passage de fluide caloporteur est une voie de passage de liquide de refroidissement du moteur.

**8.** Système selon la revendication 1, comprenant :

un réservoir de stockage de gaz naturel comprimé ;
un régulateur de pression servant à recevoir le gaz naturel comprimé provenant du réservoir de stockage, détendre le gaz naturel comprimé et faire circuler le gaz naturel détendu vers une entrée de l'échangeur thermique.

**9.** Système selon la revendication 1 ou 8, comprenant un corps de moteur configuré pour brûler le gaz naturel reçu de l'échangeur thermique.

**10.** Système selon la revendication 8 ou 9, comprenant une pompe à réfrigérant servant à faire circuler le liquide de refroidissement du moteur du corps du moteur à une entrée de l'échangeur thermique.

**11.** Procédé de réchauffage de gaz naturel carburant moteur comprenant les opérations consistant à :

faire passer le gaz naturel carburant par une voie de passage de carburant dans le corps allongé (201) d'échangeur thermique, la voie de passage de carburant s'étendant entre un premier orifice pour carburant (204b) à une première extrémité du corps allongé d'échangeur thermique et un second orifice pour carburant (204d) à la seconde extrémité opposée du corps allongé d'échangeur thermique ;
faire passer le liquide caloporteur par une voie de passage de carburant dans le corps allongé d'échangeur thermique, la voie de passage de fluide caloporteur s'étendant entre un premier orifice pour fluide caloporteur à la première extrémité du corps allongé d'échangeur thermique et un second orifice pour fluide caloporteur à la seconde extrémité du corps allongé d'échangeur thermique, la voie de passage de fluide caloporteur étant parallèle à la voie de passage de carburant et à côté de celle-ci ; et
transférer de la chaleur entre le liquide caloporteur dans la voie de passage de fluide caloporteur teur et le gaz naturel carburant dans la voie de passage de carburant par une voie de transfert de chaleur entre la voie de passage de fluide caloporteur et la voie de passage de carburant, la voie de transfert de chaleur comprenant une paroi de transfert de chaleur (205) entre la voie de passage de fluide caloporteur et la voie de passage de carburant, des ailettes (212d-f) qui s'étendent depuis la paroi de transfert de chaleur dans la voie de passage de fluide caloporteur, et des ailettes (212a-c) qui s'étendent depuis la paroi de transfert de chaleur dans la voie de passage de carburant, une première protubérance (214a) s'étendant dans la voie de passage de carburant en face de la première pluralité d'ailettes, et une seconde protubérance (214b) s'étendant dans la voie de passage de fluide caloporteur en face de la seconde pluralité d'ailettes, et transférer de la chaleur du liquide caloporteur au gaz naturel carburant.

**12.** Procédé selon la revendication 11, dans lequel le transfert de chaleur comprend l'opération consistant à réchauffer le gaz naturel carburant à une température d'admission de carburant spécifiée par le dispositif de dosage carburant d'un système de moteur à gaz naturel comprimé.

**13.** Procédé selon la revendication 11 ou 12, comprenant les opérations consistant à :

recevoir le gaz naturel carburant du régulateur de pression de carburant d'un système de moteur à gaz naturel comprimé ; et
sortir le gaz naturel carburant vers le dispositif de dosage carburant d'un système de moteur à gaz naturel comprimé.

**14.** Procédé selon l'une quelconque des revendications 11 à 13, comprenant l'opération consistant à faire circuler le fluide caloporteur par le dispositif de liquide de refroidissement du moteur d'un système de moteur à gaz naturel comprimé.

**15.** Système de moteur à gaz naturel comprimé comprenant un système d'échangeur thermique pour fluide de véhicule selon l'une quelconque des revendications 1 à 7.

**16.** Système selon la revendication 15, comprenant en outre :

un réservoir de stockage de gaz naturel comprimé ;
un régulateur de pression servant à recevoir le gaz naturel comprimé provenant du réservoir de stockage, détendre le gaz naturel comprimé et faire circuler le gaz naturel détendu vers une entrée de l'échangeur thermique.

**100**

**114**
Exhaust
Manifold

**102**
Fuel Tank

**112**
Engine
Coolant
Circulator

**110**
Engine
Body

**104**
Pressure
Regulator

**106**
Heat
Exchanger

**108**
Fuel
Meter

FIG. 1

**FIG. 2A**

FIG. 2C

203a
214a
212c
212f
214b
203b

212b
212a
205
212d
212e

200

202b
204c
204d

206
201
203a
203b

FIG. 2B

200
202a
204a
204b
206

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 74981213 A